# EUROPEAN PATENT SPECIFICATION

(11) **EP 2 345 129 B1**
(45) Date of publication and mention of the grant of the patent: **19.02.2020**
(21) Application number: 09816959.2
(22) Date of filing: 25.09.2009
(51) Int. Cl.: H02J 3/01, H02M 1/44, G05F 1/66, H02M 7/538, H02J 3/40

(54) **ADAPTIVE GENERATION AND CONTROL OF ARBITRARY ELECTRICAL WAVEFORMS IN A GRID-TIED POWER CONVERSION SYSTEM**
ADAPTIVE ERZEUGUNG UND STEUERUNG WILLKÜRLICHER ELEKTRISCHER WELLENFORMEN IN EINEM NETZGEBUNDENEN LEISTUNGSUMWANDLUNGSSYSTEM
GÉNÉRATION ET COMMANDE ADAPTATIVE DE FORMES D'ONDES ÉLECTRIQUES ARBITRAIRES DANS UN SYSTÈME DE CONVERSION D'ÉNERGIE RACCORDÉ AU RÉSEAU

(30) Priority: 26.09.2008 US 100628 P; 19.02.2009 US 153940 P
(43) Date of publication of application: 20.07.2011
(73) Proprietor: Xslent Energy Technologies, LLC, Novato, CA 94949 (US)
(72) Inventor: MARRONE, Frank, P., Novato, CA 94945 (US); MCKINLEY, Arnold, F., Novato, CA 94945 (US); HORTON, Fred, C., Novato, CA 94945 (US); WESTBROOK, Bill, B., Jr., Novato, CA 94945 (US); KLEMM, Joseph, M., Novato, CA 94945 (US); BULLEN, M., Jamie, Novato, CA 94945 (US); MATAN, Stefan, Novato, CA 94945 (US)
(74) Representative: Manley, Nicholas Michael
(86) International application number: PCT/US2009/058492
(87) International publication number: WO 2010/036974

(56) References cited:
- EP-A2- 1 902 349
- KR-A- 20080 048 132
- US-A- 5 109 185
- US-A1- 2006 198 165
- US-A1- 2008 130 332
- US-B2- 7 102 430
- ABEYASEKERA T ET AL: "Elimination of subharmonics in direct look-up table (dlt) sine wave reference generators for low-cost microprocessor-controlled inverters", IEEE TRANSACTIONS ON POWER ELECTRONICS, INSTITUTE OF ELECTRICAL AND ELECTRONICS ENGINEERS, USA, vol. 18, no. 6, 1 November 2003 (2003-11-01), pages 1315-1321, XP011103144, ISSN: 0885-8993, DOI: 10.1109/TPEL.2003.818830

## Description

### FIELD

Embodiments of the invention relate to generation and control of electrical waveforms, and more particularly to adaptive generation and control of arbitrary electrical waveforms using software processing tied to hardware waveform generators and controllers, and even more particularly to its use in electrical grid-tied power conversion.

### BACKGROUND

Harmonic distortion of a waveform is characterized by the presence of unwanted frequencies within the waveform that are integer multiples of the fundamental frequency (known as "harmonics" of the fundamental frequency). Using Fourier analysis, all alternating waveforms can be characterized as a sum of the fundamental sinusoidal frequency and its harmonics. An idealized waveform for transferring energy is purely sinusoidal. Thus, the ideal power signal waveform desired is purely sinusoidal with a fundamental of 50/60 Hertz (depending on the country) with no harmonic distortion.

In an electrical power grid, unwanted harmonic distortion may cause the heating of induction motors, transformers, capacitors, and may overload neutral power lines. Equipment that requires an accurate voltage wave shape, such as silicon controlled rectifiers (SCRs), are also affected (e.g., overheating) by harmonic distortion.

In multi-phase systems, harmonics that are due to single phase distorting loads may spread across the other (e.g., three) phases giving neutral currents (i.e., currents on the neutral line) a higher value than the active line current. When harmonics are absent, the neutral line typically carries only a small current. When single phase loads introduce harmonics, there is increased risk of overloading the neutral line. Overloading the neutral line increases the risk of overheating and the risk of fire, and may cause grounding problems.

Harmonics in an electrical power grid system affect substation transformers and power factor correction capacitors. Transformers are affected by a distorted current waveform wherein they generate excessive heat, shortening their life expectancy. Capacitors are affected by the voltage waveform creating excessive heat with an attendant risk of explosion.

Harmonic distortion, both in the supply and the load are problematic and require careful management. Electrical systems such as photovoltaic inverters that tie to the power grid in the United States must comply with the UL 1741 interconnection standard. This standard requires that the total root mean square of the harmonic voltages may not exceed thirty percent of the fundamental root mean square output voltage rating (section 45.4.1). Any single harmonic may not exceed fifteen percent of the fundamental root mean square output. These measurements must be made with the inverter delivering one hundred percent of its output rating to a resistive load.

DC to AC power inverters, which commonly appear in photovoltaic or wind generation systems, use a pulse width modulator (PWM) for sine wave generation. While this produces a relatively pure sine wave, harmonic content remains, and may actually be introduced by other hardware in the inverter. Inverter power output cannot achieve maximum performance with reducing the harmonics. Additionally, the harmonics may need to be controlled and/or reduced to comply with interconnection standards for equipment connected to the electrical power grid. Filters are commonly used in inverter supplies that use a PWM to cancel harmonic distortion. These add significant cost and power transfer inefficiencies. An alternative to such filters is to compensate for detected harmonics by generating an inverse harmonic signal and applying it to the PWM to cancel the distortion. Such an approach requires either extensive software processing or additional costly hardware. In these traditional systems, the cost of equipment rises as the number of harmonics needing control increases. To cut costs and complexity, certain harmonics are often ignored, which runs counter to the desired effect.

The phase shift between grid voltage and current plays a significant role on the grid in the transfer of "reactive power." When such phase shifts occur, the transmission lines act as inductive loads, which reduces the voltage along the line. This effect on the transmission lines leads to brownouts and blackouts. It is in the utilities' best interest to reduce such phase shifting everywhere on the grid up to a certain degree. Common practice keeps the phase shift at about .90 or .95 power factor to prevent resonance phenomena from occurring. Phase shifting is introduced by inductive loads but are commonly supplied by large power generators many miles away. This phase shifting can be offset more locally by static capacitive compensators, but that is costly.

Prior art document EP 1 902 349 discloses a single stage inverter device for power converters, comprising switching means (M1-M4) capable to periodically connect an energy source, in particular a photovoltaic one, to an electric network or grid, the switching means being controlled by controlling electronic means operating according to a single switching cycle control of the switching means, the operative and circuit device parameters being such to fulfil a series of constraints simultaneously optimising both the maximum power point tracking or MPPT (Maximum Power Point Tracking) and the output power factor or PF-out (Power Factor-output) for one or more operation conditions. The present invention further concerns the related method of controlling and the related method of scaling such device.

### BRIEF DESCRIPTION OF THE DRAWINGS

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.
Figure 1 is a block diagram of an embodiment of a system that controls harmonic distortion with a software feedback control subsystem coupled to a hardware waveform controller.
Figure 2 is a block diagram of an embodiment of a system that controls harmonic distortion.
Figure 3 is a block diagram of an embodiment of an inner control loop of a nested feedback control system.
**Figure 4** is a flow diagram of an embodiment of a process for generating an output signal based on an idealized reference signal.

Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

### DETAILED DESCRIPTION

As described herein, an output is generated based on an idealized output, which provides harmonic distortion control of an output signal for a given input signal. In one embodiment, software processing in conjunction with hardware waveform generation and control ensures the shape, proportion, and timing of an output waveform. The output waveform is based on input synchronization information, including, but not limited to, timing, phasing, and/or frequency information, the instantaneous form of the actual output waveform, and a reference "ideal" waveform represented by tabular data. By measuring the actual output, and providing corrections to the control/generation mechanisms, a system converges on an arbitrary output waveform given specific input information related to timing, phasing, and other frequency characteristics, the actual output waveform, and a specific table representing an ideal target waveform. Such a system can be used to produce any arbitrary output electrical waveform with low undesired harmonic distortion, as well as an arbitrary phase relative to reference tabular data representing an ideal waveform. Thus, both harmonic distortion and phase of the output signal can be controlled.

As described herein, rather than handling the "reactive power" problem mile away from the load, the reactive power can be generated locally, resulting in a more cost effective method for handling the "reactive power" problem that currently exists in grid-tied systems. In one embodiment, a grid-tied power conversion system provides a mix of active and reactive power on demand, dynamically, which saves cost, and provides a more stable electrical power grid. In one embodiment, a power conversion system dynamically changes the phase shift between its output current (locally) and the grid voltage to provide a mix of active and reactive power on demand.

Reference to generating reactive power locally and shifting phase of an output waveform with respect to a target periodic waveform may be understood to accomplish a similar purpose. In one embodiment, power factor is controlled locally at a load by controlling the phase shift of the output waveform as facing an electrical grid. Thus, looking at the load, power factor can be maintained at or very near '1' by matching the output waveform phase shift to that of the load. Thus, the output waveform and load may be out of phase with respect to the electrical grid, effective "generating reactive power" locally at a load. The phase can be controlled by matching the output waveform to the ideal desired output waveform, rather than attempting to filter or match the output to the grid and/or the load.

A control process (e.g., implemented via software process of a microprocessor or other form of controller) receives information about specific desired periodic timing, phasing or other frequency information for a target or synchronization signal. The control process also samples the instantaneous magnitude of the generated output waveform. The frequency information and the instantaneous magnitude may depend on load characteristics. The control process compares the received data to setpoints of a reference digitized ideal waveform (e.g., a reference waveform as stored in tabular form), point by point, and computes error data, point by point. In one embodiment, the comparing and computing are performed in parallel. The ideal waveform may be exactly synchronized to the target or synchronization signal, or it may have a fixed phase offset. Where a phase offset is applied, the phase offset can be hard coded or changed dynamically.

The system applies the generated error data to an appropriate feedback control subsystem (for example, a proportional-integral-derivative (PID) controller), which generates signal updates. In one embodiment, the error data is point-to-point as with the reference signal, and may indicate changing or doing nothing at a particular output point. The sum of the error data may be referred to as update tabular data, which is applied to a hardware waveform generator and/or controller. The waveform generator produces an output waveform that more closely matches the referenced ideal waveform. The system allows dynamically adaptive improvements, either to the update algorithm or to the table of corrected data for any arbitrary reference waveform.

In a power conversion embodiment, the power source is sampled and controlled by the control process through known techniques, such as MPPT (maximum power point tracking) or Dynamic Impedance Matching (e.g., as described in co-pending patent application no. 11/774,562, filed July 7, 2007, entitled "POWER EXTRACTOR DETECTING A POWER CHANGE," and assigned to the same corporate assignee). Sampling and controlling the power source for power conversion helps maximize the power transfer by the input power converter.

As described, the system can converge an output signal to an ideal reference signal without analysis of or knowledge of specific harmonic distortion. However, by virtue of converging the output signal and its waveform to an idealized signal/waveform, the system reduces multi-order harmonic distortion in the output waveform regardless of its phase offset to the input synchronizing signal without knowledge of relative power levels associated with individual harmonic frequencies. From one perspective, harmonic distortion control may be achieved with a more deliberate focus on generation of the output waveform, irrespective of information about specific harmonics of the output waveform. Thus, focusing on generating an ideal output waveform rather than focusing on particular harmonics, reduces the complexity of the distortion update system while more effectively reducing distortion

As described herein, the output waveform can be converged on a synchronizing or target waveform of arbitrary shape and phase alignment. The output waveform can be either a current waveform or a voltage waveform. The system generates an output signal, rather than simply attempting to modify and/or filter an input signal. Thus, the system can converge the output to the synchronizing (target) waveform with only input information related to timing, phasing, and other characteristics of the synchronizing waveform. The generated output signal is compared to ideal target waveform information to modify the output waveform during runtime or active operation of the system. The comparison allows updating values to generate a new output waveform closer to the ideal than originally expressed without the need to analyze the harmonic content of the output waveform.

In one embodiment, the ideal target waveform is stored as a table of value entries or otherwise as a group of setpoints. The waveform entries (or setpoints) may be in any length or format, integer or non-integer. The ideal target waveform entries may be generated dynamically in runtime, or hard-code or pre-compiled from pre-computations. Either dynamic or pre-generation of the waveform includes computing the values of ideal reference points based on an ideal form of a desired output waveform. The values may be proportional to a normalized waveform (e.g., peak value of '1'), or may be computed with a multiplier (scaling the waveform either up or down). The waveform shape may be sinusoidal or non-sinusoidal in represented form. The ideal waveform may, for example, be a sine wave, square wave, sawtooth, or other periodic waveform.

In one embodiment, the waveform entries are evenly spaced (in either the time domain or the frequency domain), but they are not necessarily evenly spaced. Timing information could be included within the system to indicate when samples should be taken to correspond to the setpoints of the ideal waveform. The waveform value entries could be running forward in time or backward in time or any mix thereof. The entries may be stored in a compressed or non-compressed format or state. In one embodiment, the data may be altered during runtime to affect a change in the form of the ideal waveform to another (e.g., different) ideal waveform.

The comparison mechanism within the system implements a comparison algorithm, which may be any standard or non-standard algorithm that compares two numbers. The comparison may involve sampling techniques, but such techniques are not necessarily required. In one embodiment, the comparison is point-by-point. Alternatively, multiple points may be sampled and compared, or the sampling may otherwise be considered not point-by-point.

The control process may include a selection mechanism, which may perform any standard or non-standard selection algorithm. One example selection algorithm is a Proportional-Integration-Derivative (PID) controller. The selection algorithm itself may or may not perform calculations, and may or may not transform data from the time domain to frequency domain or vice-versa as part of the selection process. In one the selection mechanism selects data point-by-point. Alternatively, the selection mechanism may select data by group.

The system includes output hardware that generates the output waveform. The output hardware is driven by a control mechanism to cause the hardware to create the output waveform. The updated table values may be applied to the output hardware using any standard or non-standard technique to drive the generation of the output waveform. In one embodiment, the output hardware is driven with Pulse-width Modulation (PWM). However, other digital, variable power control mechanisms could be used. Alternatively, analog or step control mechanisms could be used to drive the output.

As suggested above, in one embodiment, the generated output waveform may be shifted in phase with respect to the synchronizing waveform. As described herein, the timing could be adjusted by the controller to drive the output waveform generation at a phase offset with respect to the synchronization waveform. Such phase shifting can be accomplished dynamically without increasing harmonic distortion, in contrast to traditional systems that manipulate or filter an input signal.

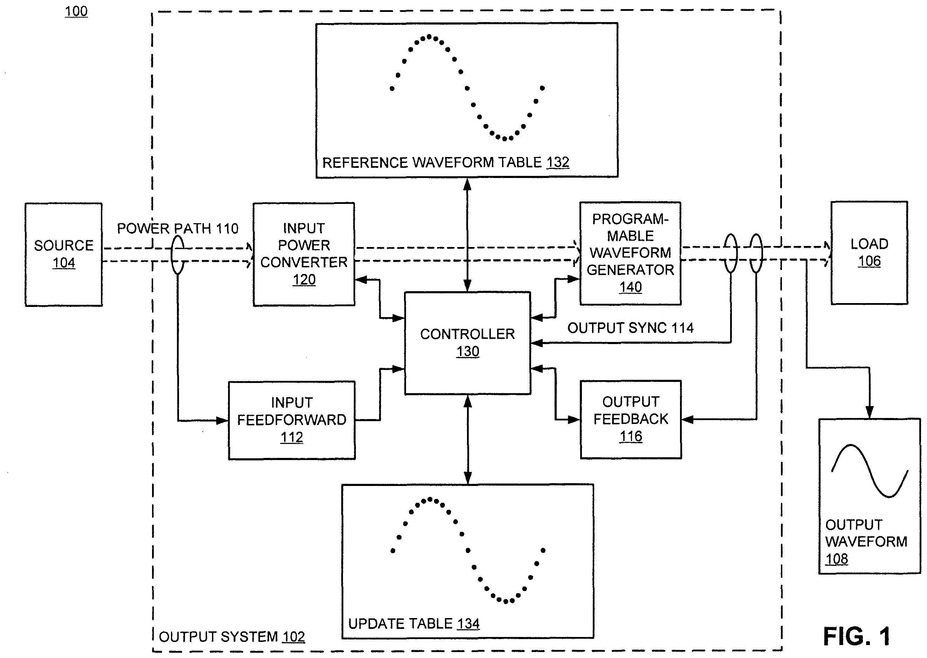

**Figure 1** is a block diagram of an embodiment of a system that controls harmonic distortion with a software feedback control subsystem coupled to a hardware waveform controller. System 100 includes power source 104, load 106, and output and control system 102. Power path 110 represents the path of electrical power from source 104 to load 106, as controlled by output system 102.

Output system 102 includes input power converter 120 to receive input power from source 104 and convert it to another form (e.g., DC to AC). Input power converter 120 includes hardware components for receiving a power signal to convert, and may include appropriate power components. In one embodiment, input power converter 120 implements dynamic impedance matching, which enables the input electronics to transfer maximum power from source 104. Dynamic impedance matching includes constantly tracking a maximum power point, as well as driving an input power coupler (e.g., a transformer) to maintain as flat a power slope as possible (e.g., slope of zero). Input power converter 120 may receive control signals or information from controller 130, as well as providing input to indicate operation of the converter.

Input feedforward 112 provides information (e.g., maximum power value, frequency as appropriate, or other information to control the input power converter hardware) about the source power to controller 130. Controller 130 controls input power converter 120 based on the input information about the input power. Controller 130 represents any type of processor controller that may be embedded in output system 102. Controller 130 may be or include any type of microcontroller, digital signal processor (DSP), logic array, or other control logic. Additionally, controller 130 may include appropriate memory or storage components (e.g., random access memory, read only memory (ROM), registers, and/or Flash) to store code or values generated or obtained during runtime operation or pre-computed.

Controller 130 drives programmable waveform generator 140 to generate the desired output waveform. Generator 140 also lies on power path 110, and receives input power from input power converter 120 to output. While the power may be transferred, it is not necessarily output with the same waveform as it is received. For example, a DC signal may be output as a sinusoidal signal, as shown in the example of Figure 1. Other power conversions can be accomplished similarly as shown and described. In one embodiment, generator 140 includes a PWM to generate output waveform 108. Generator 140 receives control signals and information from controller 130, and may provide status or operations information or feedback to controller 130. The output waveform may be either current or voltage.

Output system 102 is able to incorporate specific timing, phasing, or other frequency information, into generating output waveform 108. Such timing, phasing, or other frequency information may be referred to as "input synchronization data." In one embodiment, such input synchronization data arrives from real-time load information, in which case it may be referred to as "load synchronization input." The load synchronization input or input synchronization data indicates information necessary to determine the synchronization signal discussed above. Such information is indicated in output system 102 as output sync 114. In a system where the output is anticipated (e.g., connecting to an electrical grid), certain voltage, timing, or other information may be expected (e.g., 120V at 60Hz), and an initial estimate programmed in or made by the system at startup. Based on load synchronization data, the initial estimate may be adjusted.

Controller 130 also measures output feedback 116 off power path 110, to determine the actual output generated by generator 140. The actual output is compared to an ideal reference to determine if the desired output is being generated. In one embodiment, output feedback 116 is an abstraction to represent output measurement by controller 130, and does not include separate components in itself. In one embodiment, output feedback 116 includes a sampling mechanism or other data selection mechanism to compare to the ideal reference signal. If output feedback 116 includes components separate from controller 130, it may be driven by controller 130, and receive comparison data from controller 130 and provide error or feedback information. In one embodiment, output feedback 116 is understood to include at least hardware components necessary for a feedback control process to interface with the output lines. Additionally, output feedback 116 may include other hardware for performing measurements, computations, and/or performing processing.

Both output sync 114 and output feedback 116 may be considered feedback loops. It will be understood that output sync 114 and output feedback 116 are not the same thing, and serve different purposes. Output sync 114 indicates what the ideal reference signal should look like, as stored in reference waveform table 132. Output feedback 116 indicates how the actual output varies from the reference signal. Update table 134 represents data generated in response to output feedback 116. In one embodiment, output sync 114 is based on voltage information on the output of power path 110, while output feedback 116 is based on output current generated at the output of power path 110.

Based on output sync 114 (or based on an initial estimate of the output sync), output system 102 stores and/or generates reference waveform table 132, which represents an ideal form of the output waveform desired to be generated by generator 140. Reference waveform table 132 may be stored as a table or other set of points (or setpoints) that reflect what the output waveform "should" look like. While a sinusoidal waveform is represented, any periodic waveform could be used. Reference waveform table 132 may alternatively be referred to as a reference waveform source.

Based on output feedback 116, output system 102 generates update table 134. Update table 134 includes entries or points to indicate how to modify the operation of generator 140 to provide an output more closely matching the waveform of reference waveform table 132. While indicated as a table, update table 134 may be a stored table that is modified at certain intervals (e.g., each entry is updated as necessary to reflect measured error data), or may be generated newly at each update interval. Update table 134 may alternatively be referred to as an update data source. The "updates" may be modifications of old values, the replacement of values, or may be stored in different locations within a memory accessed by controller 130. In one embodiment, each value of update table 134 indicates an "up," "down," or no change for each of a set of points. Such values are applied to the hardware that controls the output of generator 140 to cause the output signal to converge on the desired ideal waveform.

From one perspective, output system 102 can be viewed as having five features or components. While these features are depicted in Figure 1 via certain block diagrams, it will be understood that different configurations and a variety of different components can be used to implement one or more of these features. For purposes of discussion, and not by way of limitation, these features are described following with references such as "Feature 1," "Feature 2," and so forth. It will be understood that such a convention is merely shorthand to refer to the subject matter of the described feature or component, and does not necessarily indicate anything with respect to order or significance.

Feature 1 may include means for incorporating specific timing, phasing or other frequency information. The means includes hardware and/or software to generate and receive the input synchronization data or load synchronization input referred to above, which is based on output sync 114. Feature 2 includes reference waveform table 132, which may include a table of data or an equation within software that represents the ideal form of output waveform 108. Feature 3 includes controller 130, which may be or include a software algorithm that compares the actual output waveform generated by generator 140 with the ideal tabular representation as represented by reference waveform table 132. Feature 4 includes an algorithm within controller 130 that computes or otherwise selects and generates update data represented by update table 134. Feature 5 includes generator 140 that uses the update data from update table 134 to generate output waveform 108 of the desired shape, proportion, timing, and phase.

With regard to Feature 1, the specific timing, phasing, or other frequency information provides synchronization information to the comparison and update algorithms in controller 130. The information may come by way of a table, equation, sampling of real-time hardware monitored signals, or other source.

With regard to Feature 2, the data representing the reference waveform, can be of any length and of any format, integer or non-integer, if within a table. Such a table may be generated dynamically at runtime or be hard-coded at compile time. The ideal form of the waveform represented may be sinusoidal or non-sinusoidal. The waveform may be represented by data values evenly spaced in the time domain or non-evenly spaced, forward in time or backward in time or any mix thereof. The waveform could alternatively be represented by data values in the frequency domain, and organized in any fashion. The data may be compressed or non-compressed. The data may be represented by an equation rather than computed data setpoints, or part by an equation and part by a table. In one embodiment, the stored setpoints in a table are the computed results of an equation. The data may be altered during processing at runtime to change the form of the ideal waveform to a different ideal. The values in reference waveform table 132 can be modified or replaced with different values if altered at runtime. The data may be aligned to be in exact phase with the input waveform or it may be shifted in phase.

With regard to Feature 3, controller 130 may include any traditional or standard comparison algorithm. A control algorithm compares data values representing the output waveform, sampled by hardware, and transformed into software data values through standard or non-standard sampling techniques. In one embodiment, the controller compares the ideal setpoints of the table or equation computations with the synchronization information, point by point, and generates error data, point by point. In one embodiment, the controller can process multiple points at once instead of point-by-point.

With regard to Feature 4, controller 130 includes a selection algorithm which creates or generates new data using any standard or non-standard technique. In one embodiment, the selection algorithm involves performing calculations. Alternatively, the selection algorithm may simply select data without performing processing or performing calculations. The selection algorithm may replace data values in a table of setpoints, or leave the data values in the table preferring to use another storage area. The selection algorithm may transform the data from the time domain to the frequency domain and vice-versa as part of its selection process. The algorithm provides an error update mechanism (e.g., algorithm) in that it identifies data values that will correct the output waveform when applied. Thus, the output waveform after application of the data values appears more like the preferred ideal waveform.

With regard to Feature 5, the new data values represented by update table 134 are applied to hardware in generator 140 through standard processes to drive the generation of the output waveform. In one embodiment, the new data values are applied via a PWM mechanism or any other mechanism that transforms discrete data values into an analog output form.

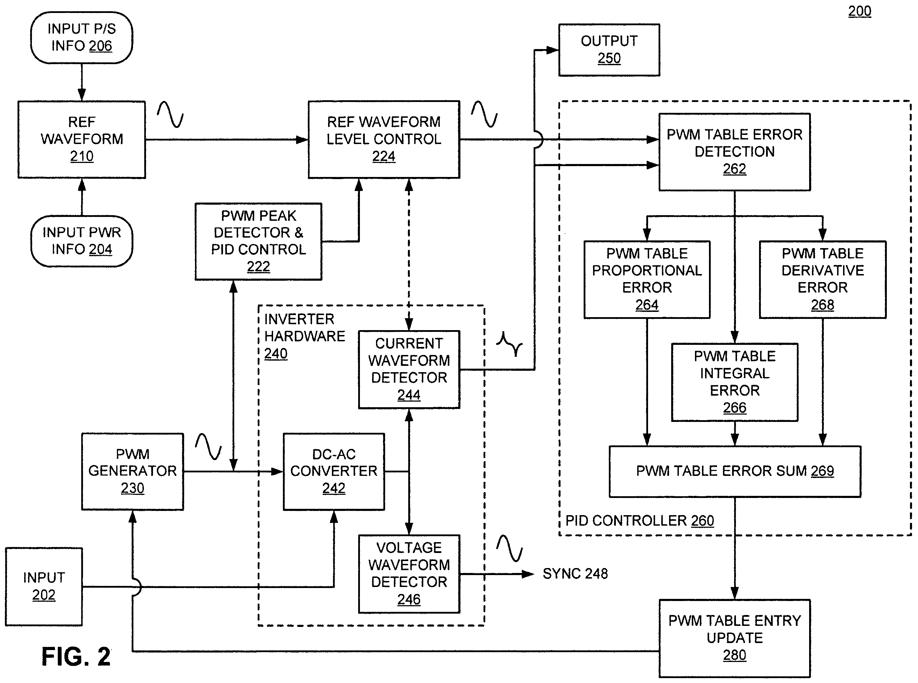

**Figure 2** is a block diagram of an embodiment of a system that controls harmonic distortion. In one embodiment, system 200 of Figure 2 is an example of a grid-tied power conversion system implementing system 100 of Figure 1. Thus, input 202 may correspond to input power from source 102, and output 250 may correspond to an output at load 106. In one embodiment, system 200 controls harmonic distortion of the output current signal and the phase shift between the grid voltage and the output current signal of a grid-tied solar photovoltaic or other source, DC to AC power conversion system.

System 200 inverts input DC power 202 into output AC power at output 250. In one embodiment, the voltage and current at output 250 are both ideal 60 Hz sinusoidal waves, undistorted by spurious harmonics, where the current either lags or leads the voltage by a phase shift. Such an implementation can be employed in a grid-tied system, where the output voltage is firmly established by the grid-tie at output 250, but the current is not. Regulations UL 1247 require that the current be reduced in harmonic distortion. As illustrated, system 200 provides at least the formation of an ideal sinusoidal waveform, shifted in phase from the fixed voltage of the grid, yet undistorted in aspect.

In one embodiment, the operations of system 200 can be separated as three elements. The first is to establish a table of ideal current waveform values for the desired waveform with a desired angle of phase shift without distortion. While described more specifically to output current waveforms and ideal current waveforms, it will be understood that such is a non-limiting example, and the discussion with respect to system 200 could be applied also to controlling output voltage waveforms, with modifications that will be understood by those skilled in the art. The second is to compare an actual output signal generated by a waveform generator to the ideal waveform. The third is to generate, with input timing information and the error information, an update table of values that allows the waveform generator to correct the actual output waveform. The operations iteratively improve the output waveform tending toward the ideal waveform (e.g., a sinusoid). Thus, the result of the operations places a pure 60 Hz current waveform in-phase with, leading, or lagging the grid voltage waveform.

The main power flow-through path in one embodiment occurs as follows: Input 202 is DC input power. PWM generator 230 drives DC-to-AC converter 242 using a table of updated values (PWM table entry update 280). In one embodiment, update table 280 corresponds with table 140 of Figure 1. Input DC power 202 passes into DC-to-AC converter 242 of inverter hardware 240, and leaves as output AC current waveform 250. Current waveform detector 244 detects the current waveform at output 250. The input waveform is illustrated at PWM generator 230 as a perfect sine wave, and distorted at current waveform detector 244. The amount of distortion may be exaggerated, but illustrates that the output waveform may not even initially look much like the ideal desired waveform. However, the waveform converges through the feedback. Inverter hardware 240 also includes voltage waveform detector 246, which generates sync information 248, which corresponds to the output sync information of Figure 1.

The control loop flow detecting and implementing the feedback occurs as follows: Information about the DC input power 204 and input phase shift information 206 refines a reference ideal waveform 210. The reference ideal waveform, as discussed above, can be stored as a table. In one embodiment, simultaneously the output of PWM generator 230 is peak detected 222 and allowed to scale the ideal table in reference waveform level control 224. The output of level control 224 is the instantaneous ideal waveform desired. The reference waveform from reference waveform level control 224 and the actual output is received at PID (proportional-integral-derivative) controller 260.

PID controller 260 includes PWM table error detector 262, which receives the scaled reference waveform and the actual output waveform. The error becomes the error input for proportional error block 264, integral error block 266, and derivative error block 268. The sum of the error signals is PWM table error sum, which provides the PID controller output to PWM table entry update 280. These updated table values are fed back into PWM generator 230 and drive the generator to adjust the output of inverter hardware 240, to converge the output signal to reference waveform 210.

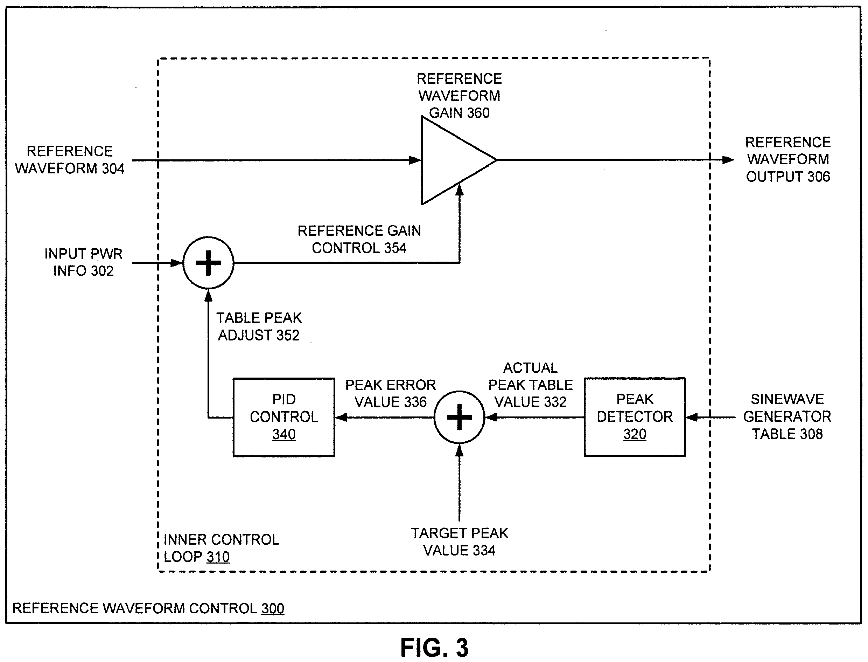

**Figure 3** is a block diagram of an embodiment of an inner control loop of a nested feedback control system. Reference waveform control 300 is a controller of a grid-tied system. Reference waveform control 300 includes inner control loop 310 of a nested feedback control system. The nested loops are interdependent. That is, the function of one control loop affects a signal that is used as an input to the other control loop. The outer control loop corrects for transient harmonic distortion in the output waveform as described previously. Inner control loop 310 is completely nested within outer control loop. Inner control loop 310 receives as input information related to values for which inner control loop 310 provides feedback.

Within inner control loop 310, input power information 302 is received and combined with the error signal table peak adjust 352. As used herein, "combining" refers to performing one or more operations with or based on the inputs, and is not to be understood as limited to addition or accumulation functions. The selective combination of input power information 302 and table peak adjust 352 generates reference gain control 354, which sets and adjusts the gain of reference waveform 304 at reference waveform gain 360 to dynamically adjust the inverter output to fit current operating conditions that include input power and local grid characteristics.

In one embodiment, reference waveform control 300 adjusts the reference waveform as follows: The latest or most current sine wave generator table 308 is examined and the peak table value is extracted by peak detector 320. Actual peak value 332 is compared to target peak value 334, generating peak error value 336. Target peak value 334 may be hard coded based on typical hardware characteristics, or it may be determine in real time. The error signal is conditioned by PID control or controller 340 to tailor the frequency response of inner control loop 310 to prevent it from interacting inappropriately with the outer control loop response.

The output of PID control 340 is the table peak adjust signal 352, which is combined with the input power information 302 to derive reference waveform gain control signal 354. Using reference gain control signal 354, reference waveform gain 360 can increase or reduce the amplitude of the reference waveform 304 to adjust reference waveform output 306 to exactly match what is required for the operating conditions of the system for power conversion.

In one embodiment, input power information 302 is constant or very slowly moving as compared to inner control loop 310 (e.g., approximately 10 times slower or more). When input power information 302 is slow moving, inner control loop 310 fine tunes the amplitude of reference waveform 304 in real time to assure that the PWM table values span a specific range of values including specific minimum and maximum values. Containing the PWM table values within a specific range of values enhances the ability of the grid tie converter to deliver maximum output power while maintaining maximum waveform control resolution.

Having interdependent control loops could result in system instability, as error generated by one may be propagated and amplified by the other in a spiraling-up fashion. One method to help achieve stability is to perform the corrective operation of outer control loop less frequently than the corrective operation of inner control loop 310. In that way, inner control loop 310 may have time to stabilize with respect to a given value of reference waveform output 306 prior to the outer loop operating to correct harmonic distortion error. In one embodiment, the outer control loop is performed at a frequency of 1x as compared to a frequency of 10x for inner control loop 310. The order of magnitude difference in frequency of adjustment allows for more stable operation. It will be understood that 10x is one example of an order of magnitude, and the comparison in frequency of performance may be approximately 10, or more.

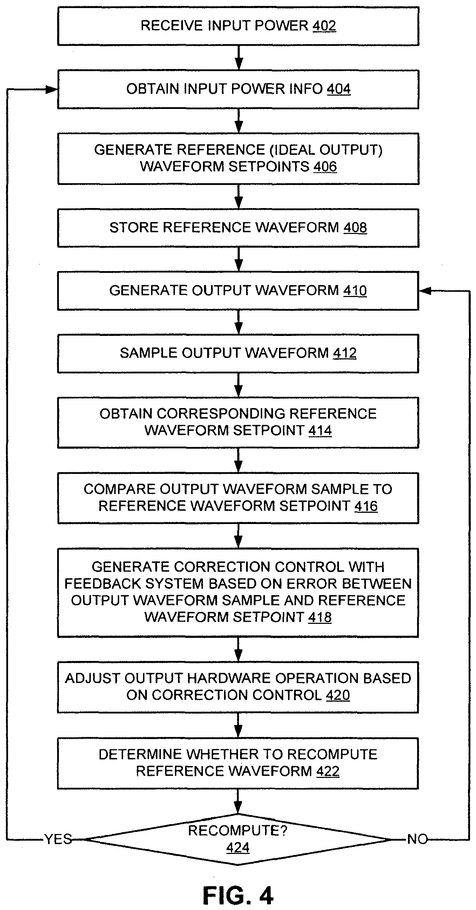

**Figure 4** is a flow diagram of an embodiment of a process for generating an output signal based on an idealized reference signal. Flow diagrams as illustrated herein provide examples of sequences of various process actions. Although shown in a particular sequence or order, unless otherwise specified, the order of the actions can be modified. Thus, the illustrated implementations should be understood only as an example, and the process for establishing the secure channel can be performed in a different order, and some actions may be performed in parallel. Additionally, one or more actions can be omitted in various embodiments of the invention; thus, not all actions are required in every implementation. Other process flows are possible.

A power converter system receives input power, 402. The system converts the received power to a different form, or acts as a boost to clean up the input power signal and put a clean signal back out onto the grid. A reference setpoint generator obtains input power information, 404. As discussed with respect to Figure 4, various processing elements may be described as separate components of the system, such as the reference setpoint generator. These elements may be separate components, or all part of a primary system controller, in accordance with what is described in certain embodiments above. The system may include logic that samples the input power and makes certain calculations to generate the information that is then sent to the signal generators. The reference setpoint generator generates a group of setpoints that represent a reference (ideal output) waveform, 406. The reference waveform is what the best possible output (or ideal output) of the system would look like.

In one embodiment, the reference setpoint generator stores the reference waveform setpoints in a table for later use. Alternatively, the reference setpoints can be computed from an algorithm that implements an equation. The reference setpoint generator may occasionally update the reference setpoints, either in a scheduled (e.g., based on an amount of time) way, or in response to detecting a difference in the input signal.

The base output waveform generator generates an output waveform, 410. In one embodiment, the system includes a sampling circuit to sample the output waveform, 412. The sampler sends the output waveform sample to a feedback system. The feedback system obtains a corresponding reference waveform setpoint, 414, which indicates what the value of the sample should be. The feedback system compares the output waveform sample to the reference waveform setpoint, 416, and generates a correction control signal based on a difference between the output waveform sample and the reference waveform setpoint, 418.

A system controller adjusts operation of a base output waveform generator based on receiving the correction control signal. Thus, in response to receiving the correction control signal, the system adjusts the operation of the output hardware, 420. In one embodiment, the generation and sampling of the output waveform and subsequent error correction can be considered as a continuous operation. That is, the operation will continue while the system is operational. Occasionally, the system may adjust the reference waveform. Thus, the system may determine whether to recompute the reference waveform, 422. If the system determines not to recompute, 424, the system will continue to perform the "inner loop" of adjusting the output waveform as compared to the reference waveform. If the system determines to recompute, 424, the reference setpoint generator updates its information about the input power signal, recomputes the reference waveform, and the system compares the output signal to the updated reference waveform.

Various operations or functions are described herein, which may be described or defined as software code, instructions, configuration, and/or data. The content may be directly executable ("object" or "executable" form), source code, or difference code ("delta" or "patch" code). The software content of the embodiments described herein may be provided via an article of manufacture with the content stored thereon, or via a method of operating a communication interface to send data via the communication interface. A machine readable medium may cause a machine to perform the functions or operations described, and includes any mechanism that provides (i.e., stores (e.g., computer-readable medium) and/or transmits (e.g., communication medium)) information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein may be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

## Claims

1. A method of power conversion in a grid-tied power conversion system, comprising:
receiving at a controller (130) characteristic shape and phase information about a target periodic waveform of an electrical grid system onto which to output power;
generating an output waveform with output hardware, the output waveform being an output current waveform;
sampling the output waveform;
comparing the output waveform with the controller to a corresponding reference output waveform (108), the reference output waveform (108) representing an ideal current waveform version of the target periodic waveform based on the received characteristic shape and phase information and having either the same or an arbitrary phase relative to the target periodic waveform;
generating a feedback signal (269) based on comparing the output waveform to the reference output waveform (108); and
adjusting an operation of the output hardware with at least one control signal from the controller (130)at runtime based on the feedback signal, wherein adjusting the operation of the output hardware converges the output waveform toward the reference output waveform (108) shape and phase.

2. The method of claim 1, wherein generating the output waveform comprises:
generating the output waveform based on a pulse width modulated base waveform, the pulse width modulated base waveform created from entries in a pulse width modulator (PWM) table.

3. The method of claim 2, wherein adjusting the operation of the output hardware further comprises:
dynamically adjusting one or more entries in the PWM table during runtime based on the generated feedback signal.

4. The method of claim 1, wherein sampling the output waveform and comparing the output waveform to the reference output waveform (108) comprises:
sampling and comparing point-by-point between the two waveforms.

5. The method of claim 1, wherein comparing the output waveform to the reference output waveform (108) comprises:
precomputing a set of ideal sample points representing the reference output waveform prior to sampling the output waveform; and
storing the precomputed sample points.

6. The method of claim 1, wherein comparing the output waveform to the reference output waveform (108) comprises:
comparing a sample point of the output waveform to a corresponding reference setpoint (416) with a PID (proportional-integral-derivative) controller (260).

7. The method of claim 1, wherein adjusting the operation of the output hardware further comprises:
adjusting the operation of the output hardware to reduce harmonic distortion in the output waveform without performing a specific harmonic distortion analysis.

8. The method of claim 1, further comprising:
dynamically adjusting entries in a reference waveform table (132) during runtime to dynamically adjust the reference output waveform (108).

9. The method of claim 1, further comprising:
shifting the output waveform in phase dynamically with respect to the target periodic waveform without increasing harmonic distortion.

10. A power conversion system of grid-tied power conversion, comprising:
a reference waveform (210) representing an ideal version of a target periodic waveform (246) of an electrical grid system onto which to output power, the reference waveform (210) generated based on the received characteristic shape and phase information (204) of the target periodic waveform (246), the reference waveform (210) being a reference output current waveform, the reference output current waveform representing an ideal version of the target periodic waveform having either the same or an arbitrary phase (206) relative to the target periodic waveform;
output hardware (240) configured to generate an output current waveform (250);
a feedback loop (300) configured to measure the output current waveform; and
a controller (260) configured to measurements indicating shape and phase of the output current waveform to shape and phase of the reference waveform and generate a feedback signal (269) based on the comparison;
wherein the output hardware configured to adjust an operation (280) based on the feedback signal, wherein to adjust the operation of the output hardware is to converge the output waveform toward the reference waveform shape and phase.

11. The power conversion system of claim 10, wherein
the controller (260) configured to compare the output waveform measurements point-by-point to setpoints representing the reference waveform (210).

12. The power conversion system of claim 10, further comprising:
the controller configured to dynamically adjust entries in a reference waveform table representing the reference waveform (210) during runtime to dynamically adjust the reference waveform (210).

13. The power conversion system of claim 10, further comprising:
the output hardware configured to shift the output waveform in phase dynamically with respect to the target periodic waveform (246) without increasing harmonic distortion.

## Patentansprüche

1. Verfahren zur Leistungsumwandlung in einem netzgebundenen Leistungsumwandlungssystem, das Folgendes beinhaltet:
Empfangen, an einer Steuerung (130), von charakteristischen Form- und Phaseninformationen über eine periodische Zielwellenform eines Stromnetzsystems, an das Leistung abgegeben werden soll;
Erzeugen einer Ausgangswellenform mit Ausgangshardware, wobei die Ausgangswellenform eine Ausgangsstromwellenform ist;
Abtasten der Ausgangswellenform;
Vergleichen, mit der Steuerung, der Ausgangswellenform mit einer entsprechenden Referenzausgangswellenform (108), wobei die Referenzausgangswellenform (108) eine ideale Stromwellenformversion der periodischen Zielwellenform auf der Basis der empfangenen charakteristischen Form- und Phaseninformationen repräsentiert und entweder dieselbe oder eine zufällige Phase relativ zur periodischen Zielwellenform hat;
Erzeugen eines Rückmeldesignals (269) auf der Basis des Vergleichs der Ausgangswellenform mit der Referenzausgangswellenform (108); und
Justieren eines Betriebs der Ausgangshardware mit wenigstens einem Steuersignal von der Steuerung (130) zur Laufzeit auf der Basis des Rückmeldesignals, wobei das Justieren des Betriebs der Ausgangshardware die Ausgangswellenform in Richtung von Form und Phase der Referenzausgangswellenform (108) konvergiert.

2. Verfahren nach Anspruch 1, wobei das Erzeugen der Ausgangswellenform Folgendes beinhaltet:
Erzeugen der Ausgangswellenform auf der Basis einer pulsbreitenmodulierten Basiswellenform, wobei die pulsbreitenmodulierte Basiswellenform von Einträgen in einer PWM-(Pulsbreitenmodulator)-Tabelle erzeugt wird.

3. Verfahren nach Anspruch 2, wobei das Justieren des Betriebs der Ausgangshardware ferner Folgendes beinhaltet:
dynamisches Justieren eines oder mehrerer Einträge in der PWM-Tabelle während der Laufzeit auf der Basis des erzeugten Rückmeldesignals.

4. Verfahren nach Anspruch 1, wobei das Abtasten der Ausgangswellenform und das Vergleichen der Ausgangswellenform mit der Referenzausgangswellenform (108) Folgendes beinhaltet:
Abtasten und Vergleichen, Punkt für Punkt, zwischen den beiden Wellenformen.

5. Verfahren nach Anspruch 1, wobei das Vergleichen der Ausgangswellenform mit der Referenzausgangswellenform (108) Folgendes beinhaltet:
Vorberechnen eines Satzes von die Referenzausgangswellenform repräsentierenden idealen Abtastpunkten vor dem Abtasten der Ausgangswellenform; und
Speichern der vorberechneten Abtastpunkte.

6. Verfahren nach Anspruch 1, wobei das Vergleichen der Ausgangswellenform mit der Referenzausgangswellenform (108) Folgendes beinhaltet:
Vergleichen eines Abtastpunkts der Ausgangswellenform mit einem entsprechenden Referenzsollwert (416) mittels eines PID (Proportional-Integral-Derivat)-Reglers (260).

7. Verfahren nach Anspruch 1, wobei das Justieren des Betriebs der Ausgangshardware ferner Folgendes beinhaltet:
Justieren des Betriebs der Ausgangshardware zum Reduzieren von harmonischer Verzerrung in der Ausgangswellenform, ohne eine spezifische harmonische Verzerrungsanalyse durchzuführen.

8. Verfahren nach Anspruch 1, das ferner Folgendes beinhaltet:
dynamisches Justieren von Einträgen in einer Referenzwellenformtabelle (132) während der Laufzeit zum dynamischen Justieren der Referenzausgangswellenform (108).

9. Verfahren nach Anspruch 1, das ferner Folgendes beinhaltet:
dynamisches Verschieben der Ausgangswellenform in der Phase in Bezug auf die periodische Zielwellenform, ohne harmonische Verzerrung zu erhöhen.

10. Leistungsumwandlungssystem zur netzgebundenen Leistungsumwandlung, das Folgendes umfasst:
eine Referenzwellenform (210), die eine ideale Version einer periodischen Zielwellenform (246) eines Stromnetzsystems repräsentiert, an das Leistung abgegeben werden soll, wobei die Referenzwellenform (210) auf der Basis der empfangenen charakteristischen Form- und Phaseninformationen (204) der periodischen Zielwellenform (246) erzeugt wird, wobei die Referenzwellenform (210) eine Referenzausgangsstromwellenform ist, wobei die Referenzausgangsstromwellenform eine ideale Version der periodischen Zielwellenform repräsentiert, die entweder dieselbe oder eine willkürliche Phase (206) relativ zur periodischen Zielwellenform hat;
Ausgangshardware (240), konfiguriert zum Erzeugen einer Ausgangsstromwellenform (250);
eine Rückmeldeschleife (300), konfiguriert zum Messen der Ausgangsstromwellenform; und
einen Regler (260), konfiguriert zum Vergleichen von Messwerten, die Form und Phase der Ausgangsstromwellenform anzeigen, mit Form und Phase der Referenzwellenform, und zum Erzeugen eines Rückmeldesignals (269) auf der Basis des Vergleichs;
wobei die Ausgangshardware zum Justieren eines Betriebs (280) auf der Basis des Rückmeldesignals konfiguriert ist, wobei das Justieren des Betriebs der Ausgangshardware die Ausgangswellenform in Richtung auf Form und Phase der Referenzwellenform konvergiert.

11. Leistungsumwandlungssystem nach Anspruch 10, wobei
der Regler (260) zum Vergleichen der Ausgangswellenformmesswerte Punkt für Punkt mit Sollwerten konfiguriert ist, die die Referenzwellenform (210) repräsentieren.

12. Leistungsumwandlungssystem nach Anspruch 10, das ferner Folgendes umfasst:
den Regler, konfiguriert zum dynamischen Justieren von Einträgen in einer Referenzwellenformtabelle, die die Referenzwellenform (210) während der Laufzeit repräsentiert, zum dynamischen Justieren der Referenzwellenform (210).

13. Leistungsumwandlungssystem nach Anspruch 10, das ferner Folgendes umfasst:
die Ausgangshardware, konfiguriert zum dynamischen Verschieben der Ausgangswellenform in der Phase in Bezug auf die periodische Zielwellenform (246), ohne harmonische Verzerrung zu erhöhen.

## Revendications

1. Procédé de conversion d'énergie dans un système de conversion d'énergie raccordé au réseau, le procédé comprenant les étapes consistant à :
recevoir, au niveau d'un contrôleur (130), des informations caractéristiques de forme et de phase concernant une forme d'onde périodique cible d'un système de réseau électrique sur lequel produire de l'énergie ;
générer une forme d'onde de sortie avec un matériel de sortie, la forme d'onde de sortie étant une forme d'onde de courant de sortie ;
échantillonner la forme d'onde de sortie ;
comparer avec le contrôleur la forme d'onde de sortie à une forme d'onde de sortie de référence (108) correspondante, la forme d'onde de sortie de référence (108) représentant une version idéale de forme d'onde de courant de la forme d'onde périodique cible sur la base des informations caractéristiques de forme et de phase reçues et ayant la même phase que la forme d'onde périodique cible ou une phase arbitraire par rapport à celle-ci ;
générer un signal de rétroaction (269) sur la base de la comparaison de la forme d'onde de sortie à la forme d'onde de sortie de référence (108) ; et
régler un fonctionnement du matériel de sortie avec au moins un signal de contrôle du contrôleur (130) au moment du temps de marche sur la base du signal de rétroaction, le réglage du fonctionnement du matériel de sortie faisant converger la forme d'onde de sortie vers la forme et la phase de la forme d'onde de sortie de référence (108).

2. Procédé selon la revendication 1, dans lequel la génération de la forme d'onde de sortie comprend l'étape consistant à :
générer la forme d'onde de sortie sur la base d'une forme d'onde de base à modulation d'impulsions en largeur, la forme d'onde de base à modulation d'impulsions en largeur étant créée à partir d'entrées dans une table de modulateur d'impulsions en largeur (PWM).

3. Procédé selon la revendication 2, dans lequel le réglage du fonctionnement du matériel de sortie comprend en outre l'étape consistant à :
régler dynamiquement une ou plusieurs entrées dans la table PWM pendant le temps de marche sur la base du signal de rétroaction généré.

4. Procédé selon la revendication 1, dans lequel l'échantillonnage de la forme d'onde de sortie et la comparaison de la forme d'onde de sortie à la forme d'onde de sortie de référence (108) comprennent l'étape consistant à :
échantillonner et comparer les deux formes d'onde point par point.

5. Procédé selon la revendication 1, dans lequel la comparaison de la forme d'onde de sortie à la forme d'onde de sortie de référence (108) comprend les étapes consistant à :
précalculer un ensemble de points idéaux d'échantillonnage représentant la forme d'onde de sortie de référence avant d'échantillonner la forme d'onde de sortie ; et
stocker les points d'échantillonnage précalculés.

6. Procédé selon la revendication 1, dans lequel la comparaison de la forme d'onde de sortie à la forme d'onde de sortie de référence (108) comprend l'étape consistant à :
comparer un point d'échantillonnage de la forme d'onde de sortie à un point de consigne de référence (416) correspondant avec un contrôleur proportionnel, par intégration et par dérivation (PID) (260).

7. Procédé selon la revendication 1, dans lequel le réglage du fonctionnement du matériel de sortie comprend en outre l'étape consistant à :
régler le fonctionnement du matériel de sortie pour réduire une distorsion harmonique dans la forme d'onde de sortie sans réaliser une analyse de distorsion harmonique spécifique.

8. Procédé selon la revendication 1, comprenant en outre l'étape consistant à :
régler dynamiquement des entrées dans une table de formes d'onde de référence (132) pendant le temps de marche pour régler dynamiquement la forme d'onde de sortie de référence (108).

9. Procédé selon la revendication 1, comprenant en outre l'étape consistant à :
décaler dynamiquement la forme d'onde de sortie en phase par rapport à la forme d'onde périodique cible sans augmenter la distorsion harmonique.

10. Système de conversion d'énergie pour la conversion d'énergie avec raccordement au réseau, comprenant :
une forme d'onde de référence (210) représentant une version idéale d'une forme d'onde périodique cible (246) d'un système de réseau électrique sur lequel produire de l'énergie, la forme d'onde de référence (210) étant générée sur la base des informations caractéristiques de forme et de phase (204) reçues de la forme d'onde périodique cible (246), la forme d'onde de référence (210) étant une forme d'onde de courant de sortie de référence, la forme d'onde de courant de sortie de référence représentant une version idéale de la forme d'onde périodique cible ayant la même phase que la forme d'onde périodique cible ou une phase arbitraire (206) par rapport à celle-ci ;
un matériel de sortie (240) configuré pour générer une forme d'onde de courant de sortie (250) ;
une boucle de rétroaction (300) configurée pour mesurer la forme d'onde de courant de sortie ; et
un contrôleur (260) configuré pour comparer des mesures indiquant une forme et une phase de la forme d'onde de courant de sortie à une forme et une phase de la forme d'onde de référence, et générer un signal de rétroaction (269) sur la base de la comparaison ;
le matériel de sortie étant configuré pour régler un fonctionnement (280) sur la base du signal de rétroaction, le réglage du fonctionnement du matériel de sortie consistant à faire converger la forme d'onde de sortie vers la forme et la phase de la forme d'onde de référence.

11. Système de conversion d'énergie selon la revendication 10, dans lequel :
le contrôleur (260) est configuré pour comparer point par point les mesures de forme d'onde de sortie à des points de consigne représentant la forme d'onde de référence (210).

12. Système de conversion d'énergie selon la revendication 10, comprenant en outre :
le contrôleur configuré pour régler dynamiquement des entrées dans une table de formes d'onde de référence représentant la forme d'onde de référence (210) pendant le temps de marche pour régler dynamiquement la forme d'onde de référence (210).

13. Système de conversion d'énergie selon la revendication 10, comprenant en outre :
le matériel de sortie configuré pour décaler dynamiquement la forme d'onde de sortie en phase par rapport à la forme d'onde périodique cible (246) sans augmenter la distorsion harmonique.
